# EUROPÄISCHE PATENTSCHRIFT

(11) **EP 2 643 911 B1**
(45) Veröffentlichungstag und Bekanntmachung des Hinweises auf die Patenterteilung: **19.11.2014**
(21) Anmeldenummer: 11778531.1
(22) Anmeldetag: 28.10.2011
(51) Int. Cl.: H02G 3/08, H02G 3/22, H02G 15/013

(54) **EINZELZUGABDICHTUNG**
SINGLE-LINE SEAL
JOINT D'ÉTANCHÉITÉ DE TRAIN INDIVIDUEL

(30) Priorität: 26.11.2010 DE 202010015853 U
(43) Veröffentlichungstag der Anmeldung: 02.10.2013
(73) Patentinhaber: Rehau AG & Co, 95111 Rehau (DE)
(72) Erfinder: VOHLER, Tobias, 92318 Neumarkt (DE)
(86) Internationale Anmeldenummer: PCT/EP2011/005468
(87) Internationale Veröffentlichungsnummer: WO 2012/069128

(56) Entgegenhaltungen:
- EP-A1- 0 763 876
- DE-A1- 10 142 628
- DE-A1-102006 061 599

## Beschreibung

Die vorliegende Erfindung bezieht sich auf eine Einzelzugabdichtung.

Eine gattungsgemäße Einzelzugabdichtung ist aus der DE 101 42 628 A1 bekannt. Derartige Abdichtungen dienen der Abdichtung von Kabeln, Rohren und Rohren mit Kabeln, insbesondere von Hausanschlüssen. Gerade bei sogenannten Mikro-Kabelrohren werden an die einzusetzenden Einzelzugabdichtungen erhebliche Anforderungen in Bezug auf Wasser- und / oder Gasdichtigkeit und Zugfestigkeiten vorgegeben.

Die vorbekannte Einzelzugabdichtung weist eine Dichtmasse zum Umschließen eines Kabels oder Kabelrohres auf und umfasst ein die Dichtmasse zumindest teilweise umgebendes mehrteiliges Gehäuse mit einem Innenquerschnitt quer zum Kabel oder Kabelrohr, welcher kleiner ist als der Querschnitt der Dichtmasse quer zum Kabel oder Kabelrohr, wobei das Gehäuse von einem Verbindungselement zusammengehalten ist.

Um die geforderten Eigenschaften zu erreichen sind die beiden Hälften des Gehäuses gegenseitig miteinander verzahnt und verklemmen nur bei der Montage. Diese Verbindung allein ist nicht hinreichend genug zugbelastbar, um die geforderte Wasser- und/oder Gasdichtigkeit zu erzielen. Daher ist ein mehr als 180° des Außenumfangs des Gehäuses umfassendes Verbindungselement notwendig, um beide Hälften fest miteinander zu montieren. Solche Verbindungselemente sind aufwendig und kostspielig in der Herstellung und sorgen für zusätzlichen Platzbedarf bei meist erheblich eingeschränktem Bauraum.

Weiterhin ist aus der DE 101 42 628 A1 ein mehrteiliges Verschluss- und Abdichtelement bekannt, das für mit Kabeln belegbare Rohre eingesetzt wird, und das aus einem zweiteiligen Gehäuse besteht, das mittels einer Verbindungsklammer verschließbar ist. Eine solche Lösung ist aufwendig und insbesondere schwierig in der Handhabung, da beim Verschließen die beiden Teile des Gehäuses präzise zueinander zu positionieren sind.

Aus der DE 10 2006 061 599 A1 geht ein Füll- und Abdichtsystem für elektrisch isolierende Gehäuse und Umhüllungen von Kabel- und Leitungsverbindungen hervor, bei dem zwei komplementäre, gemeinsam das Gehäuse bildende starre Gehäuseschalen vorhanden sind, in denen ein Füll- und Abdichtmaterial vorhanden ist. Die Gehäuseschalen lassen sich schnappverschlussartig schließen, wodurch die Kabelenden bzw. die Kabel- und Leitungsverbindung in Füll- und Abdichtmaterial eingeschlossen sind. Bei dieser Lösung ist die Dichtwirkung des Füll- und Abdichtmaterials in Bezug auf die eingeschlossenen Kabelenden bzw. die Kabel- und Leitungsverbindungen nur begrenzt gegeben.

Es ist daher eine Aufgabe der vorliegenden Erfindung, die vorstehend genannten Nachteile zu vermeiden.

Diese Aufgabe wird für eine Einzelzugabdichtung mit technisch einfachen Mitteln mittels der Merkmale des Hauptanspruchs gelöst.

Durch die mechanisch hinreichend zugbelastbare, gelenkige Verbindung der Teile des Gehäuses werden die Vorteile einer mehrteiligen Einzelzugabdichtung erreicht. Gleichzeitig kann an anderer Stelle - etwa um 180 ° zum Gelenk versetzt - ein erheblich einfacher gestaltetes und sehr viel kleineres Verbindungselement genügend Zugkraft aufbringen, um das Gehäuse vollständig um die Dichtmasse zu legen.

Eine vorteilhafte Weiterbildung der erfindungsgemäßen Einzelzugabdichtung ist derart gestaltet, dass das Teil als Schale geformt ist und ein Lagerauge an einer Schalenlängsseite bereitstellt, welches mittels einer Steckachse gelenkig mit einem anderen Teil mit Lagerauge verbindbar ist. Im einfachsten Fall sind die Teile als Ober- und Unterschale mit einander zugeordneten Lageraugen hergestellt. An den Längsseiten der Schalen sind zueinander versetzt jeweils mindestens zwei Lageraugen so angeordnet, dass die Steckachse beim Zusammensetzen abwechselnd beide Teile durchdringt und zugfest miteinander verbindet. Dazu kann beispielsweise ein Lagerauge der Oberschale in eine Lücke zwischen zwei Lageraugen der Unterschale eingefügt werden und umgekehrt. Ober- und Unterschale sind hierbei nicht identisch, können jedoch "endlos" produziert und abgelängt werden. Eine Umfangslinie des Lagerauges kann dabei außerhalb der Umfangslinie des zusammengesetzten, geschlossenen Gehäuses verlaufen und nach "außen" oder "innen" hinausragen. Bei einer nach "Innen" versetzten Anordnung des Lagerauges kann die Dichtmasse weiter zusammengedrückt werden. Auch kann das Lagerauge mit dem Querschnitt des Gehäuses "fluchten", um eine möglichst geringe Einbaugröße der Einzelzugabdichtung zu erreichen.

Um die Gas- und/oder Wasserdichtigkeit der Einzelzugabdichtung zu erhöhen, kann es vorteilhaft sein, dass das Teil an seiner der Dichtmasse zugewandten Innenwand mit zueinander beabstandeten Dichtrippen versehen ist, die die Dichtmasse beim vollständigen Umschließen des Gehäuses weiter abschnittweise verdichten. Kommt es beispielsweise beim Transport, Lagerung, Einbau und / oder dem Betrieb der Einzelzugabdichtung unbemerkt zu einer Beschädigung der Dichtmasse an den äußeren Enden, kann die Dichtmasse ihre Aufgabe mittels der innenliegenden Dichtrippen weiter zuverlässig erfüllen.

Die passive Sicherheit in Bezug auf die Dichtigkeit der erfindungsgemäßen Einzelzugabdichtung kann derart verbessert werden, dass die Dichtmasse als Einlegedichtung in Form eines Rohrs aus flexiblem Material ausgebildet ist, dessen Innenmaß sich längs der Hauptachse ändert. Somit kann ein Ende der Dichtmasse mit größerer Öffnung ausgestattet werden, die an das Außenmaß eines Verlegerohrs, Erdrohrs, Leerrohrs, Erdkabels mit Schutzisolierung und dergleichen angepasst ist. Das andere Ende der Dichtmasse weist hingegen eine im Vergleich zum anderen Ende erheblich kleinere Öffnung auf. Diese Öffnung ist beispielsweise an das Außenmaß eines in ein Wohnhaus führenden Kabels, Glasfaserkabels, Telefon- oder Stromkabels angepasst. Diese Art von Außenmaßen ist zumeist genormt und macht bei der Produktion der Einlegedichtungen eine übersichtliche Zahl von sinnvollen Kombinationen an Öffnungen möglich. Eine solche Einlegedichtung kann durch Strangextrusion mittels steuerbar sich vergrößernden oder verkleinernden Docht, Dorn oder Innenbüchse kostengünstig erzeugt werden. Der Außenumfang der Einlegedichtung bleibt hingegen unverändert.

Nach einer Weiterbildung der Einzelzugabdichtung kann es vorteilhaft sein, dass das Verbindungselement zum Einen aus einem Versatz besteht, der federnd an einer Seite des Teils angeformt ist und zur die Dichtmasse aufnehmenden Innenseite offen ist und zum Anderen eine zugfeste Verbindung mittels eines in die offene Innenseite des Versatzes einrastenden Vorsprungs ermöglicht, der an dem angrenzenden Teil angeordnet ist und beim Umschließen vom Versatz überdeckt ist. Diese mehrteilige Einzetzugabdichtung verfügt über ein unverlierbares Verbindungselement. Bei einer zweiteiligen Gestaltung des Gehäuses kann der Versatz an einer der beiden Halbschalen angeformt sein und der Vorsprung entsprechend an der anderen Halbschale vorgesehen werden. Der Vorsprung und der Versatz können dabei ebenso wie das Lagerauge aus einem höherwertigen Material als der Rest des Gehäuses, der Teile, der Schalen, der Dichtrippen hergestellt sein. Die Verbindung zwischen dem Teil, den Schalen oder Halbschale und dem Versatz ist so gewählt, dass eine Veränderung der Lage des Versatzes beim "Verbinden" mit dem Vorsprung möglich ist. Diese Verbindung ist jedoch immer so ausgelegt, dass eine dauerhafte Zugbeanspruchung der "Verbindung" mit dem Vorsprung gewährleistet bleibt. Diese Möglichkeit der Lageänderung erlaubt zudem auch ein Öffnen der Verbindung zwischen Vorsprung und Versatz.

Eine alternative Einzelzugabdichtung ist so weitergebildet, dass das Verbindungselement von einem Schieber bereitgestellt ist, der eine Umfangslinie eines Hohlkörpers beschreibt, die eine Aussparung aufweist und mit den die Aussparung definierenden Enden der Umfangslinie je einen Vorsprung je eines aneinander angrenzenden Teils umgreift, wobei sich die lichte Weite der Aussparung quer zur Zugkraft ändert. Der Schieber setzt an den Vorsprüngen an, die sich radial auswärts von der Außenseite der Teile des Gehäuses erstrecken. Die lichte Weite ist zu Beginn so groß, dass das Verbindungselement leicht über beide Vorsprünge anzuordnen ist und die Zugkraft zum Zusammenhalten des Gehäuses mit Dichtmasse noch klein oder nicht vorhanden ist. Durch weiteres Aufschieben des Schiebers auf die Außenseite in Richtung anderes Ende der Einzelzugabdichtung verengt sich der Abstand zwischen den definierten Enden des Schiebers. Mit sinkender lichte Weite werden sodann die beiden Teile unter Zugkraft zusammengezogen und umschließen letztlich die Dichtmasse.

Zur weiteren Verringerung der Baugröße kann die alternative Einzelzugabdichtung so weitergebildet sein, dass der Schieber ein Rohr mit sichelförmiger Umfangslinie aufweist, dessen Mittellinie einen an das Gehäuse angepassten Radius aufweist und ein Rohrende von einer Schlagfläche abgedeckt ist. Der aufgeschobene Schieber bildet lediglich eine kleine Erhebung an der Außenseite des Gehäuses, da seine eigene Außenseite angepasst ist. Die Schlagfläche vereinfacht die Montage und ermöglicht das Aufbringen höherer Zugkräfte. Die die lichte Weite definierenden Enden des Rohres bilden mit der Mittelinie jeweils einen Winkel von bis zu etwa 5°. Dieser Winkel ermöglicht ein vergleichsweise leichtes Aufschieben und verhindert recht gut das Herunterschieben von den Vorsprüngen.

Die Erfindung wird nun anhand von Ausführungsbeispielen mit Bezug auf die beiliegenden Zeichnungen näher beschrieben.

In den Zeichnungen zeigen:
- Fig. 1: eine schematische Querschnittansicht einer ersten Ausführungsform der Erfindung;
- Fig. 2: eine perspektivische Ansicht einer zweiten Ausführungsform der erfindungsgemäßen Einzelzugabdichtung;
- Fig. 3: eine Ansicht eines Details einer dritten Ausführungsform; und
- Fig. 4: eine Seitenansicht einer Alternative zur Figur 3.

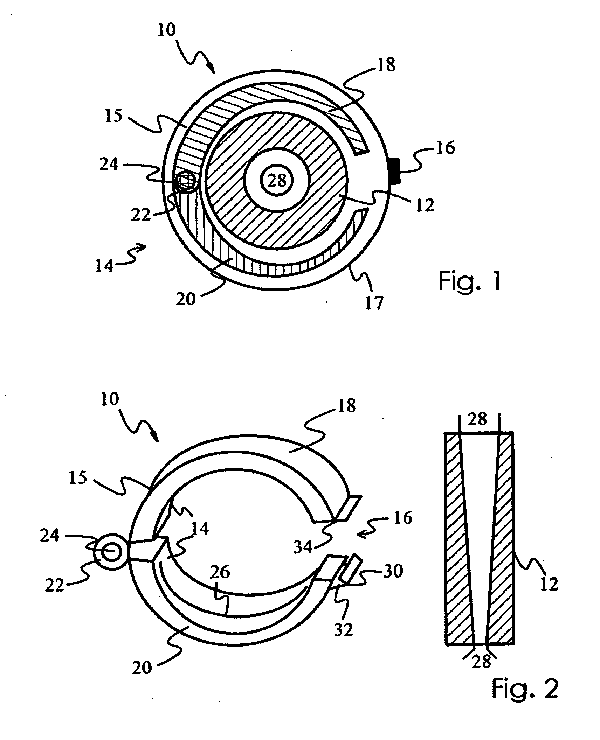

Soweit im Folgenden nichts anderes gesagt ist, bezieht sich die nachfolgende Beschreibung stets auf alle Ausführungsformen der Figuren 1 bis 4, wobei gleiche Bezugszeichen dieselben konstruktiven Merkmale beschreiben.

Figur 1 zeigt eine offene Einzelzugabdichtung 10 mit einer Dichtmasse 12 zum Umschließen eines Kabels und einem die Dichtmasse 12 zumindest teilweise umgebenden mehrteiligen Gehäuse 14 mit einem Innenquerschnitt quer zum Kabel, welcher kleiner ist als der Querschnitt der Dichtmasse 12 quer zum Kabel, wobei das Gehäuse 14 von einem Verbindungselement 16 zusammengehalten ist. Die gezeigte Einzelzugabdichtung 10 ist offen, da das Gehäuse 14 die Dichtmasse 12 nicht vollumfänglich umgibt. Statt des Kabelrohrs könnte ein Kabelrohr, Glasfaserkabel, Stromkabel oder jede andere für eine Hausversorgung notwendige Zuleitung von der Dichtmasse 12 umgeben sein. Mindestens zwei Teile in Form von Halbschalen 18 und 20 des Gehäuses 14 sind gelenkig miteinander verbindbar. Beim Verschwenken der beiden Halbschalen 18 und 20 verändert sich der Innenquerschnitt des Gehäuses 14 quer zum Kabel. Das mehrteilige Gehäuse 14 umgibt die Dichtmasse 12 nur per Zugkraft mittels des Verbindungselements 16 vollständig, wenn das den Außenumfang 15 des Gehäuses 14 umgebende Zugband 17 des Verbindungselements 16 verkürzt wird.

Für die gelenkige Verbindung der Halbschalen 18 und 20 des Gehäuses 14 der Einzelzugabdichtung 10 ist je ein Lagerauge 22 an einer Schalenlängsseite der beiden Teile bereitgestellt, welche von einer Steckachse 24 durchdrungen sind. Die Dichtmasse 12 dieser Einzelzugabdichtung 10 ist als Einlegedichtung in Form eines Rohrs aus flexiblem Material ausgebildet, dessen Innenmaß 28 sich längs der Hauptachse ändert. Dieses Verkleinern des Innenmaßes 28 sorgt bei einem Kabel oder dergleichen mit konstantem Außenumfang für eine starke "natürliche" Haftung zwischen Kabel und Dichtmasse 12. Ein unbeabsichtigtes Herausziehen des Kabels aus der Dichtmasse 12 oder der Einzelzugabdichtung wird erheblich verringert. Durch die mehrteilige Bauweise der Einzelzugabdichtung kann die Dichtmasse 12 jedoch zuerst über das Kabel gezogen werden und anschließend die Ummantelung mit dem Gehäuse 14 erfolgen.

In Figur 2 ist eine Variante der erfindungsgemäßen Einzelzugabdichtung 10 gezeigt mit je einem an der Außenseite 15 angeordneten Lagerauge 22. Diese Lageraugen 22 sind aus hochwertigem Polycarbonat oder einem anderen bruchsicheren beziehungsweise mechanisch stark belastbaren Kunststoffmaterial. Das Lagerauge 22 kann zudem mit einer Auskleidung versehen sein, um die Zugkräfte von der Steckachse gleichmäßiger auf die Teile 18 und 20 zu verteilen. Die als Halbschalen gezeigten Teile 18 und 20 sind an einer der Dichtmasse 12 zugewandten Innenwand mit zueinander beabstandeten Dichtrippen 26 versehen, die die Dichtmasse 12 beim vollständigen Umschließen des Gehäuses 14 weiter abschnittweise verdichten. Die Dichtrippen 26 verkleinern den Innenquerschnitt des Gehäuses 14 und sorgen für einen wasser- und gasdichten Verschluss der Einzelzugabdichtung 10. Zudem verringert sich die Gefahr eines Herausziehens der Dichtmasse 12 aus der geschlossenen Einzelzugabdichtung 10.

An einer der Halbschalen 20 ist ein Versatz 30 federnd an seiner Außenseite 15 angeformt, der Bestandteil eines unverlierbaren Verbindungselements 16 ist. Eine Innenseite 32 des Versatzes 30 ist in Richtung des die Dichtmasse 12 aufnehmenden Gehäuses 14 offen. Ein weiterer Bestandteil des Verbindungselements 16 ermöglicht eine zugfeste Verbindung mittels eines in die offene Innenseite 32 des Versatzes 30 einrastenden Vorsprungs 34. Dieser Vorsprung 34 ist am Rande der daran angrenzenden Halbschale 18 angeordnet und ist beim Umschließen vom Versatz 30 überdeckt.

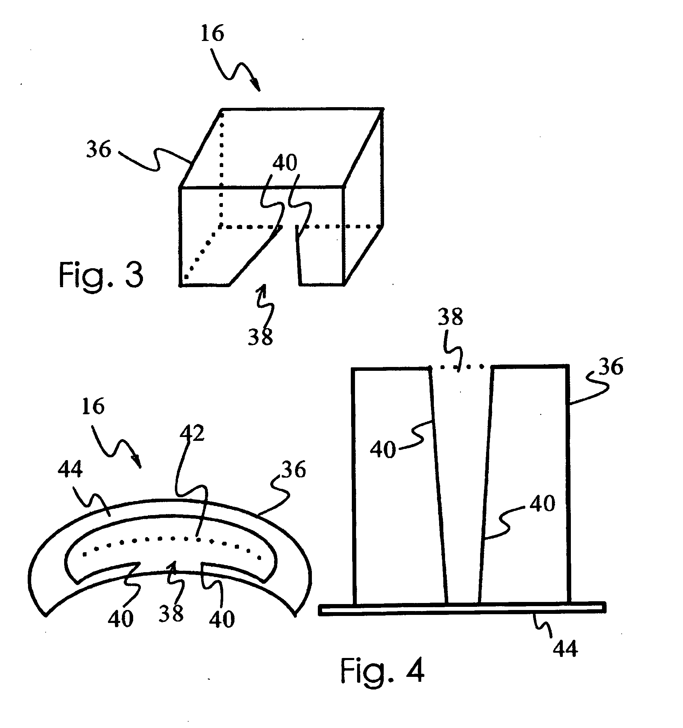

Ein weiteres Verbindungselement 16 für eine Einzelzugabdichtung 10 ist in Figur 3 dargestellt. Das Verbindungselement 16 ist von einem Schieber 36 bereitgestellt, der eine Umfangslinie eines Hohlkörpers - hier eines Würfels - beschreibt und die Umfangslinie eine Aussparung 38 aufweist und mit den die Aussparung 38 definierenden Enden 40 der Umfangslinie je einen Vorsprung 34 je eines aneinander angrenzenden Teils 18 und 20 des Gehäuses 14 umgreift, wobei sich die lichte Weite der Aussparung 38 quer zur Zugkraft ändert. Die einander gegenüberliegenden Enden 40 lassen sich über zwei Vorsprünge 34 schieben, die analog zu Figur 2 sich radial auswärts von der Außenseite 15 der Halbschalen 18 und 20 erstrecken. Dabei wird der Schieber 36 vorzugsweise mit der Seite über die Vorsprünge 34 gezogen an der die lichte Weite der Aussparung 38 am größten ist. Wird der Schieber dann längs der Hauptachse der Einzelzugabdichtung 10 weiter aufgeschoben, werden die Vorsprünge 34 gegeneinander gezogen, da sich die lichte Weite immer weiter verkleinert. Der Winkel zwischen den beiden Enden 40 beträgt bis zu 10°.

Eine weitere Ausführungsform des Schiebers 36 für eine Einzelzugabdichtung 10 ist in Figur 4 in Seitenansicht dargestellt. Der Schieber 36 weist ein Rohr mit sichelförmiger Umfangslinie auf, dessen Mittellinie 42 einen an das Gehäuse 14 angepassten Radius aufweist und an der Außenseite 15 anliegt. Ein Rohrende des Schiebers 36 ist von einer Schlagfläche 44 abgedeckt. Die beiden einander gegenüberliegenden Enden 40, die die Aussparung 38 festlegen, sind am freien Rohrende weiter auseinander als am Rohrende mit der Schlagfläche 44. Das Rohr wird mit dem freien Ende an der Außenseite 15 des offenen Gehäuses 14 angelegt und mittels Krafteinwirkung auf die Schlagfläche 44 entlang einer Trennlinie zwischen zwei benachbarten Teilen 18 und 20 aufgeschoben. Hierbei werden die beiden Teile 18 und 20 nur per Zugkraft vollständig geschlossen.

Die vorliegende Erfindung offenbart eine neuartige mehrteilige Einzelzugabdichtung, welche mittels Zugkraft ein Gehäuse gegen eine Dichtmasse wasser- und gasdicht verpresst, wobei mindestens zwei Teile des Gehäuses verschwenkbar miteinander verbunden sind und durch das Verschwenken der Teile die Verpressung der Dichtmasse die Abdichtung erfolgt. Hierdurch können insbesondere einfach, massenhaft und günstig herzustellende Verbindungselemente Einsatz finden, die ebenfalls zur Erfindung gehören.

### Bezugszeichenliste

- 10: Einzelzugabdichtung
- 12: Dichtmasse
- 14: Gehäuse
- 15: Außenseite
- 16: Verbindungselement
- 17: Zugband
- 18, 20: Teil
- 22: Lagerauge
- 24: Steckachse
- 26: Dichtrippen
- 28: Innenmaß
- 30: Versatz
- 32: Innenseite
- 34: Vorsprung
- 36: Schieber
- 38: Aussparung
- 40: Ende
- 42: Mittellinie
- 44: Schlagfläche

## Patentansprüche

1. Einzelzugabdichtung (10) mit einer Dichtmasse (12) zum Umschließen eines Kabels oder Kabelrohres und einem die Dichtmasse (12) zumindest teilweise umgebenden mehrteiligen Gehäuse (14) mit einem Innenquerschnitt quer zum Kabel oder Kabelrohr, welcher kleiner ist als der Querschnitt der Dichtmasse (12) quer zum Kabel oder Kabelrohr, wobei das Gehäuse (14) von einem Verbindungselement (16) zusammengehalten ist, **dadurch gekennzeichnet, dass** mindestens zwei Teile (18, 20) des Gehäuses (14) gelenkig miteinander verbindbar sind, wobei sich der Innenquerschnitt beim Verschwenken der beiden Teile (18, 20) verändert und dass das mehrteilige Gehäuse (14) die Dichtmasse (12) nur per Zugkraft mittels des Verbindungselements (16) vollständig umgibt.

2. Einzelzugabdichtung (10) nach Anspruch 1, **dadurch gekennzeichnet, dass** das Teil (18, 20) als Schale geformt ist und ein Lagerauge (22) an einer Schalenlängsseite bereitstellt, welches mittels einer Steckachse (24) gelenkig mit einem anderen Teil (18, 20) mit Lagerauge (22) verbindbar ist.

3. Einzelzugabdichtung (10) nach Anspruch 1 oder 2, **dadurch gekennzeichnet, dass** das Teil (18, 20) an seiner der Dichtmasse (12) zugewandten Innenwand mit zueinander beabstandeten Dichtrippen (26) versehen ist, die die Dichtmasse (12) beim vollständigen Umschließen des Gehäuses (14) weiter abschnittweise verdichten.

4. Einzelzugabdichtung (10) nach Anspruch 1 oder 3, **dadurch gekennzeichnet, dass** die Dichtmasse (12) als Einlegedichtung in Form eines Rohrs aus flexiblem Material ausgebildet ist, dessen Innenmaß (28) sich längs der Hauptachse ändert.

5. Einzelzugabdichtung (10) nach Anspruch 1, **dadurch gekennzeichnet, dass** das Verbindungselement (16) zum Einen aus einem Versatz (30) besteht, der federnd an einer Seite des Teils (18, 20) angeformt ist und zur die Dichtmasse (12) aufnehmenden Innenseite (32) offen ist und zum Anderen eine zugfeste Verbindung mittels eines in die offene Innenseite (32) des Versatzes (30) einrastenden Vorsprungs (34) ermöglicht, der an dem angrenzenden Teil (18, 20) angeordnet ist und beim Umschließen vom Versatz (30) überdeckt ist.

6. Einzelzugabdichtung (10) nach Anspruch 1, **dadurch gekennzeichnet, dass** das Verbindungselement (16) von einem Schieber (36) bereitgestellt ist, der eine Umfangslinie eines Hohlkörpers beschreibt, die eine Aussparung (38) aufweist und mit den die Aussparung (38) definierenden Enden (40) der Umfangslinie je einen Vorsprung (34) je eines aneinander angrenzenden Teils (18, 20) umgreift, wobei sich die lichte Weite der Aussparung (38) quer zur Zugkraft ändert.

7. Einzelzugabdichtung (10) nach Anspruch 6, **dadurch gekennzeichnet, dass** der Schieber (36) ein Rohr mit sichelförmiger Umfangslinie aufweist, dessen Mittellinie (42) einen an das Gehäuse (14) angepassten Radius aufweist und ein Rohrende von einer Schlagfläche (44) abgedeckt ist.

## Claims

1. Individual passage seal (10) having a sealing compound (12) for enclosing a cable or cable conduit and having a multi part housing (14) which at least partially surrounds the sealing compound (12) and has an inner cross section in a direction transverse to the cable or cable conduit which is smaller than the cross section of the sealing compound (12) in a direction transverse to the cable or cable conduit, wherein the housing (14) is held together by a connecting element (16), **characterized in that** at least two parts (18, 20) of the housing (14) can be connected to one another in an articulated manner, wherein the inner cross section changes when the two parts (18, 20) are pivoted, and **in that** the multi part housing (14) fully encloses the sealing compound (12) solely by way of tensile force by means of the connecting element (16).

2. Individual passage seal (10) according to Claim 1, **characterized in that** the part (18, 20) is in the form of a shell and provides a bearing eyelet (22) on a longitudinal shell side, it being possible for said part to be connected to another part (18, 20) with a bearing eyelet (22) in an articulated manner by means of a plug in pin (24).

3. Individual passage seal (10) according to Claim 1 or 2, **characterized in that** on its inner wall, which is directed towards the sealing compound (12), the part (18, 20), is provided with spaced apart sealing ribs (26), which further compress the sealing compound (12) in part during the operation of fully enclosing the housing (14).

4. Individual passage seal (10) according to Claim 1 or 3, **characterized in that** the sealing compound (12) is designed as an insertion seal in the form of a tube which is made of flexible material and of which the inner dimension (28) changes along the main axis.

5. Individual passage seal (10) according to Claim 1, **characterized in that** the connecting element (16), on the one hand, comprises an offset portion (30), which is formed resiliently on one side of the part (18, 20) and is open in the direction of the inner side (32), which accommodates the sealing compound (12), and, on the other hand, allows a tension resistant connection by means of a protrusion (34) which latches into the open inner side (32) of the offset portion (30), is arranged on the adjacent part (18, 20) and is covered over by the offset portion (30) during the enclosing operation.

6. Individual passage seal (10) according to Claim 1, **characterized in that** the connecting element (16) is provided by a slide (36) which describes a hollow body circumferential line which has an aperture (38) and engages around a respective protrusion (34) of a respective adjacent part (18, 20) by way of circumferential line ends (40), which define the aperture (38), wherein the inside width of the aperture (38) changes in a direction transverse to the tensile force.

7. Individual passage seal (10) according to Claim 6, **characterized in that** the slide (36) has a tube which has a sickle shaped circumferential line and of which the centre line (42) has a radius adapted to the housing (14), and one pipe end is covered by an impact surface (44).

## Revendications

1. Joint d'étanchéité à traction simple (10) comprenant un matériau d'étanchéité (12) pour entourer un câble ou un passe-câble et un boîtier (14) en plusieurs parties entourant au moins partiellement le matériau d'étanchéité (12) et présentant une section transversale intérieure transversalement au câble ou au passe-câble, laquelle est plus petite que la section transversale du matériau d'étanchéité (12) transversalement au câble ou au passe-câble, le boîtier (14) étant retenu par un élément de liaison (16), **caractérisé en ce qu'**au moins deux parties (18, 20) du boîtier (14) peuvent être reliées les unes aux autres de manière articulée, la section transversale intérieure changeant lors du pivotement des deux parties (18, 20), et **en ce que** le boîtier (14) en plusieurs parties n'entoure complètement le matériau d'étanchéité (12) que par une force de traction au moyen de l'élément de liaison (16).

2. Joint d'étanchéité à traction simple (10) selon la revendication 1, **caractérisé en ce que** la partie (18, 20) est formée en tant que coque et produit un oeil de palier (22) sur un côté longitudinal de coque, lequel peut être relié de manière articulée à une autre partie (18, 20) pourvue d'un oeil de palier (22) au moyen d'un axe enfichable (24).

3. Joint d'étanchéité à traction simple (10) selon la revendication 1 ou 2, **caractérisé en ce que** la partie (18, 20) est pourvue, sur sa paroi intérieure tournée vers le matériau d'étanchéité (12), de nervures d'étanchéité (26) espacées les unes des autres, lesquelles compriment davantage par sections le matériau d'étanchéité (12) lorsqu'il est complètement entouré par le boîtier (14).

4. Joint d'étanchéité à traction simple (10) selon la revendication 1 ou 3, **caractérisé en ce que** le matériau d'étanchéité (12) est réalisé en tant qu'insert d'étanchéité sous la forme d'un tube en matériau flexible dont la dimension intérieure (28) change le long de l'axe principal.

5. Joint d'étanchéité à traction simple (10) selon la revendication 1, **caractérisé en ce que** l'élément de liaison (16) est d'une part constitué d'un déport (30) qui est formé de manière élastique sur un côté de la partie (18, 20) et qui est ouvert en direction du côté intérieur (32) recevant le matériau d'étanchéité (12), et permet d'autre part une liaison résistant à la traction au moyen d'une saillie (34) s'encliquetant dans le côté intérieur ouvert (32) du déport (30), laquelle saillie est disposée sur la partie adjacente (18, 20) et est recouverte par le déport (30) lors du scellement.

6. Joint d'étanchéité à traction simple (10) selon la revendication 1, **caractérisé en ce que** l'élément de liaison (16) est produit par un coulisseau (36) qui décrit une ligne circonférentielle d'un corps creux, laquelle comprend un évidement (38), et qui vient en prise, par les extrémités (40) de la ligne circonférentielle définissant l'évidement (38), avec une saillie (34) respective d'une partie (18, 20) respective adjacente, le diamètre intérieur de l'évidement (38) changeant transversalement à la force de traction.

7. Joint d'étanchéité à traction simple (10) selon la revendication 6, **caractérisé en ce que** le coulisseau (36) comprend un tube présentant une ligne circonférentielle en forme de croissant, dont la ligne médiane (42) présente un rayon adapté au boîtier (14), et une extrémité de tube est recouverte par une surface de frappe (44).
